# EUROPÄISCHE PATENTANMELDUNG

(11) **EP 0 901 872 A1**
(43) Veröffentlichungstag der Anmeldung: **17.03.1999**
(21) Anmeldenummer: 98115679.7
(22) Anmeldetag: 20.08.1998
(51) Int. Cl.: B23K 26/00

(54) **"Laser-Bearbeitungsanlage"**

(30) Priorität: 02.09.1997 DE 19738236
(71) Anmelder: Messer Griesheim Schweisstechnik GmbH + Co., D-64823 Gross-Umstadt (DE)
(72) Erfinder: Grimmer, Rainer, 61440 Oberursel (DE); Nickenig, Lutz, Dr., 64832 Babenhausen (DE)
(74) Vertreter: Berdux, Klaus, Dipl.-Ing.

(57) **Zusammenfassung**

Die Erfindung betrifft eine Laser-Bearbeitungsanlage mit einem Bearbeitungstisch und einer Laserquelle, die optisch mit einem Schneidkopf verbunden ist, wobei der Schneidkopf mittels einer in Längsrichtung verfahrbaren und über Querführungen, quer verschiebbaren Schneidbrücke beliebig über den Bearbeitungstisch verfahrbar ist und mit einer Steuerung. Um die Gefährdung von Menschen durch Streulicht bei der Laserbearbeitung zu reduzieren, ist mindestens der Verfahrbereich des Schneidkopfes von einer auf Führungen (21, 22) beweglichen Schutzwand (19) umgeben.

## Beschreibung

Die Erfindung betrifft eine Laser-Bearbeitungsanlage mit einem Bearbeitungstisch und einer Laserquelle, die optisch mit einem Schneidkopf verbunden ist, wobei der Schneidkopf mittels einer in Längsrichtung angeordneten und über Querführungen, quer verschiebbaren Schneidbrücke beliebig über den Bearbeitungstisch verfahrbar ist und mit einer Steuerung.

Laser-Bearbeitungsanlagen haben sich in der Materialbearbeitung industriell durchgesetzt. Insbesondere CO₂-Laser bis etwa 20 kW werden überwiegend zum Schneiden und Schweißen eingesetzt, da der Laserstrahl als universelles Werkzeug weitgehend unabhängig von den Eigenschaften des Werkstoffes ist. Bei der Bearbeitung von Werkstoffen mit einem Laserschneidkopf, insbesondere wenn dieser in einem Winkel zum Werkstück angestellt ist, kann Streustrahlung durch Reflektion des Laserstrahls in beliebiger Richtung entstehen. Diese Streustrahlung ist für Menschen gesundheitsgefährdend. Dabei ist die Wahrscheinlichkeit des Auftretens sowie der Art und Schwere einer gesundheitlichen Schädigung abhängig von einer Reihe von Faktoren. Solche Faktoren sind die zur Wirkung gelangende Energie-bzw. Leistungsdichte, die Wellenlänge der Laserstrahlung, die Expositionsdauer, die Beschaffenheit des exponierten Gewebes (zum Beispiel dessen Pigmentierung, Behaarung und Durchblutung) und verschiedene Umweltfaktoren. Den gesundheitlichen Schädigungen werden im wesentlichen drei Arten von Wirkungsmechanismen zugrunde gelegt.

Der thermische Effekt, dessen biologische Wirkung vom einfachen Erythem bis hin zur Verbrennung des betroffenen Gewebereichs, ist der bedeutendste Schädigungseffekt. Er ist abhängig von der einwirkenden Energie- bzw. Leistungsdichte, der Expositionsdauer und der Eindringtiefe der Strahlung.

Mit dem thermischen Effekt verbunden können auch andere Erscheinungen auftreten, die als thermoakustische oder manchmal auch als nichtlineare Effekte bezeichnet werden. Dabei führen sehr hohe Energie- bzw. Leistungsdichten zu erheblichen Schädigungen des Gewebes.

In Folge von Laserexpositionen geringerer Energie- bzw. Leistungsdichte treten funktionelle Veränderungen im histochemischen Bereich des Zellstoffwechsels auf, die sowohl die normalen Prozesse fördern, als auch Abnormitäten erzeugen können. Diese Art des Wirkungsmechanismus läßt zur Zeit noch Fragen offen. So ist noch nicht geklärt, ob es zur Komulation fraktionierter Dosen oder etwa zu genetischen Wirkungen kommen kann.

Um den Bediener und Dritte vor diesen Gefährdungen durch Laserstrahlung zu schützen ist es bekannt, die am stärksten gefährdeten Organe, nämlich das Auge und die Haut durch passive Schutzmaßnahmen wie das Tragen geeigneter Kleidung und insbesondere spezieller Schutzbrillen zu schützen. Weiterhin sind zwar eine Reihe allgemeiner Schutzmaßnahmen vorgeschlagen worden, die jedoch noch keine 100%ige Sicherheit gewährleisten. So sind Laseranlagen mit dem Warnzeichen Laser zu kennzeichnen, der Arbeitsraum hell zu beleuchten um die Dunkeladaption der Augen zu verhindern und Hinweise auf das als Augenschutz zu verwendende Schutzfilter anzubringen.

Weiterhin ist es bekannt, den Laserarbeitsbereich präzise zu markieren oder den Laserarbeitsraum einzuhausen. Darüber hinaus ist es weiter bekannt, den Bearbeitungstisch vollständig oder teilweise mit Schutzwänden aus einem Werkstoff mit entsprechender Dicke zu umgeben, die die Strahlung absorbiert. Die auf dem Bearbeitungstisch befestigten Schutzwände werden bei der Laser-Bearbeitung mit dem Bearbeitungstisch verfahren.

Dabei ist es notwendig beim Zuführen bzw. Abräumen von Werkstücken in/aus dem Arbeitsbereich der Laser-Bearbeitungsanlage die Schutzwand bzw. Schutzwände zu demontieren, da selbst bei einer Kranbeladung nicht immer sichergestellt werden kann, daß der Kran ein Werkstück über die Schutzwand transportiert, ohne daß die Schutzwand beschädigt wird. Hinzu kommt, daß über den Bearbeitungstisch der Laser-Bearbeitungsanlage ragende Werkstücke in der Praxis dazu führen, daß die Bearbeitung bei demontierter Schutzwand stattfindet.

Der Erfindung liegt die Aufgabe zugrunde, eine Laser-Bearbeitunsanlage zu schaffen, bei der die Gefährdung von Menschen reduziert ist und die besonders vielseitig einsetzbar und dank guter Zugänglichkeit einfach bedienbar ist.

Diese Aufgabe wird erfindungsgemäß durch die Merkmale des Anspruchs 1 gelöst.

Dadurch, daß der Verfahrbereich des Schneidkopfes von einer auf Führungen beweglichen Schutzwand umgeben ist, die die Laserstrahlung absorbiert, ist eine Gefährdung von Menschen, wie dem Bediener der Anlage und Dritten, durch Streustrahlung nahezu ausgeschlossen. Darüber hinaus wird durch die Erfindung ein Schutz gegen Werkzeuge bzw. deren Teile erzielt, die aufgrund der hohen dynamischen Werte der Bearbeitungsmaschine von bis zu 60 m/s eine hohe Geschwindigkeit bei unsachgemäßer Befestigung und/oder Kollisionen erhalten. Dabei kann je nach Bedarfsfall eine Öffnung in der Schutzwand erzeugt werden, indem die Schutzwand entlang der stationär angeordneten Führungen verfahren wird. Die auf Führungen bewegliche Schutzwand ist besonders vielseitig einsetzbar und ermöglicht eine gute Zugänglichkeit durch die Verschiebung auf den Führungen. Die Laser-Bearbeitungsanlage kann von außerhalb der Schutzwand vorteilhaft von dem Bedienstand der Steuerung gesteuert werden.

Dadurch daß die Führungen auf dem Boden oder unter Flur angeordnet sind, entsteht beim Zuführen bzw. Abräumen großer Werkstücke z. B. mit bis zu 12 m Länge in/aus dem Arbeitsbereich der Laser-Bearbeitungsanlage mit Gabelstaplern mit ca. 10 t Gewicht kein Problem. Selbst bei einer Kranbeladung kann die freistehend angeordnete Schutzwand zum Beladen bzw. Abräumen des Bearbeitungstisches einfach geöffnet werden und damit ein freier Durchgang für Gabelstapler oder Kran geschaffen werden.

Vorteilhaft besteht die Schutzwand aus Segmenten, die lösbar miteinander verbunden sind. Hierdurch kann je nach Bedarfsfall an beliebiger Stelle eine Öffnung in der Schutzwand erzeugt werden, indem Segmente weggeklappt, gefaltet, weggehoben oder verschoben bzw. weggerollt werden. Die Segmente bestehen je nach geforderter Standzeit aus Metall und/oder durchsichtigem Material mit entsprechender Dicke, die die Strahlung absorbieren. Dabei weist jedes Material vorteilhaft ein für die Bedienung in entsprechender Höhe geeignetes Fenster aus durchsichtigem Material auf.

Die Segmente sind mit Stützelementen verbunden, wobei jedes Segment vorteilhaft von zwei Stützelementen abgestützt ist. Das Segment und die Stützelemente werden jeweils in einer als Schiene ausgebildeten Führung zwangsgeführt. Die Schutzwand ist wahlweise mit einem motorischen Antrieb verbunden und mittels des Antriebs selbsttätig verfahrbar. Der Antrieb wird bevorzugt über eine Handsteuerung oder auch über die Steuerung der Laser-Bearbeitungsanlage betätigt.

Die Segmente werden vorzugsweise flexibel bzw. gelenkig miteinander verbunden, wobei mehrere flexibel miteinander verbundenen Segmente gemeinsam motorisch verfahrbar sind. Durch die flexible Verbindung der Segmente miteinander ist ein Verschieben der Segmente um Ecken, auch mehrfach, möglich.

Den Segmenten ist nach einer vorteilhaften Ausführungsvariante ein Überwachungselement zugeordnet, welches bei einer Relativbewegung der Segmente zueinander oder zu einer stationären oder beweglichen Wand ein Signal erzeugt. Hierdurch wird sichergestellt, daß beim Öffnen der Schutzwand ein optisches, akustisches oder Maschinensignal erzeugt wird, mittels denen ein Warnhinweis oder wenn das Signal der Steuerung der Laser-Bearbeitungsanlage zugeführt wird, ein Not-Stop erzeugt wird, das die Laser-Bearbeitungsanlage ausschaltet. Die Schutzwand weist eine Höhe von < 4 m auf und besteht aus einem strahlungsabsorbierenden Werkstoff, so daß die Schutzwand eine komplette strahlungsdichte Umhüllung in horizontaler Richtung um den gesamten Verfahrbereich des Schneidkopfes bildet. Der Bereich über der Laser-Bearbeitungsanlage bleibt offen, soweit sich keine Menschen über der Laser-Bearbeitungsanlage aufhalten.

Ein Ausführungsbeispiel der Erfindung ist in der Zeichnung dargestellt und wird im folgenden näher beschrieben:

Es zeigen
- Figur 1: eine schematische Darstellung in Draufsicht der erfindungsgemäßen Laser-Bearbeitungsanlage
- Figur 2: eine perspektivische Darstellung der erfindungsgemäßen Schutzwand
- Figur 3: eine schematische Darstellung eines Verbindungselementes
- Figur 4: eine weitere schematische Darstellung in Draufsicht der erfindungsgemäßen Laser-Bearbeitungsanlage
- Figur 5: eine weitere schematische Darstellung in Draufsicht der erfindungsgemäßen Laser-Bearbeitungsanlage

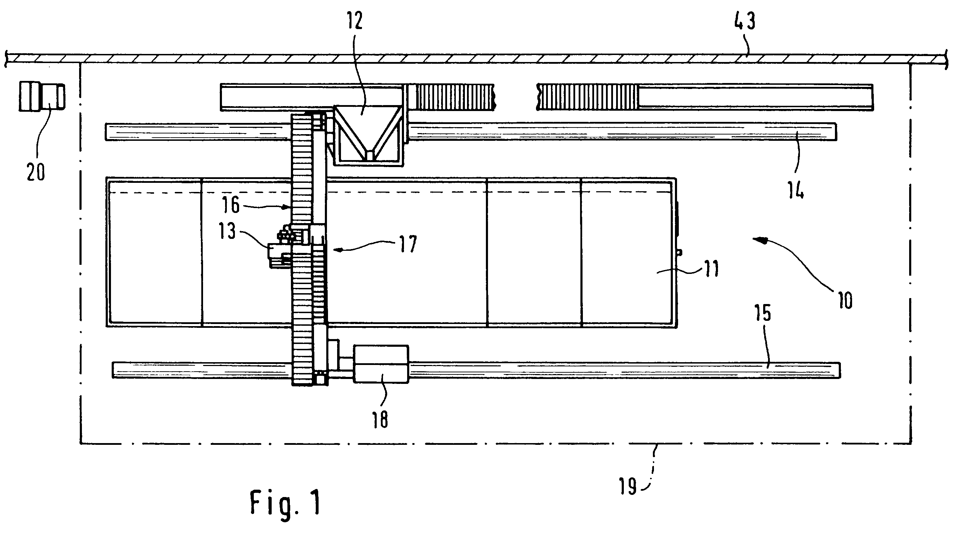

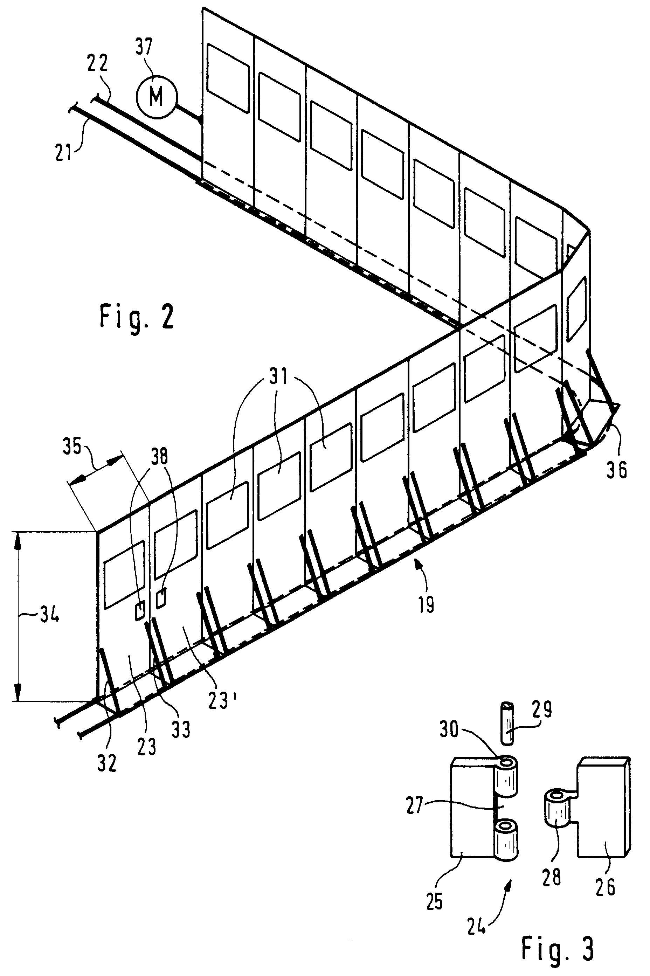

In Figur 1 ist schematisch eine Laser-Bearbeitungsanlage 10 dargestellt, die im wesentlichen aus einem Bearbeitungstisch 11 und einer Laserquelle 12 besteht, die optisch mit einem Schneidkopf 13 verbunden ist. Der Schneidkopf 13 ist mittels einer in Längsrichtung über Schienen 14, 15 mit einer Länge bis 40 m verfahrbaren und über Querführungen 16 quer verschiebbaren Schneidbrücke 17 beliebig über den Bearbeitungstisch 11 verfahrbar. Die Laser-Bearbeitungsanlage 10 weist weiterhin eine mit der Schneidbrücke 17 verfahrbare Steuerung 18 auf. Der Schneidkopf 13 kann selbstverständlich auch am Arm eines Roboters angeordnet sein. Die Laser-Bearbeitungsanlage 10 ist von einer in Figur 1 nur schematisch dargestellten Schutzwand 19 umgeben, die nach einer Ausbildung die Laser-Bearbeitungsanlage 10 an drei Seiten vollständig umschließt. In Figur 1 ist die offene Seite der Laser-Bearbeitungsanlage von einer stationären Wand 43 verschlossen. Außerhalb der Laser-Bearbeitungsanlage 10 ist die Maschinensteuerung 20 mit dem Bedienpult angeordnet. In Figur 2 ist die auf Führungen 21, 22 bewegliche Schutzwand 19 dargestellt. Die freistehend auf den als Schienen ausgebildeten Führungen 21, 22 angeordnete Schutzwand 19 ist aus einer Vielzahl von Segmenten 23 gebildet, die lösbar miteinander verbunden sind. Durch Aneinanderreihung der Segmente 23 läßt sich eine Schutzwand 19 von beliebiger Länge bilden. Als lösbare Verbindungselemente können z. B. die in Figur 3 nur schematisch dargestellten Scharniere 24 eingesetzt werden. Element 25 wird hierbei an Segment 23 und Element 26 an Segment 23' befestigt. Beim Zusammenschieben der Elemente 25 und 26 wird die in Element 25 vorgesehene Aussparung 27 von dem bei Element 26 vorgesehenen Vorsprung 28 ausgefüllt und bildet eine durchgängige, rohrförmige Aufnahme 30 für den stiftförmigen Körper 29.

Durch Herausnehmen des Körpers 29 können die Segmente 23 und 23' voneinander gelöst werden. In besonders vorteilhafter Ausführungsform sind die Verbindungsmittel 24 flexibel, beispielsweise aus Gummi oder einem Drahtgeflecht ausgebildet. Die Segmente 23 bestehen aus Stahl und weisen in Bedienhöhe ein Fenster 31 aus durchsichtigem Material, vorzugsweise Polycarbonat, auf.

Es sind bevorzugt zwei Führungen 21, 22 vorgesehen, die auf dem Boden angeordnet oder unter Flur verlegt sind. In und/oder auf der Schiene 22 sind Stützelemente 32, 33 zwangsgeführt, die fest mit den Segmenten 23 verbunden sind, während in und/oder auf Schiene 21 die Segmente zwangsgeführt sind. Die zwangsgeführten Segmente weisen eine Höhe 34 von < 4 m und eine Breite 35 von 0,5 bis 1 m auf. Durch die bevorzugten Abmessungen der Elemente ist ein Umfahren von kleinen Radien 36 vorteilhaft möglich. Vorzugsweise ist die Stützwand 19 mit einem motorischen Antrieb 37 verbunden und mittels des Antriebs 37 selbsttätig verfahrbar. Der Antrieb kann dabei als Schleppantrieb über ein nicht näher dargestelltes Getriebe und Zahnriemen oder aber über Riemen, Seil, Kette, Ritzel-Zahnstange ausgebildet sein. Über diesen Antrieb sind mehrere miteinander verbundene Segmente 23, 23' gemeinsam motorisch verfahrbar. Mindestens zwei benachbarten Segmenten ist ein gemeinsames Überwachungselement 38 zugeordnet, welches bei einer Relativbewegung der Segmente 23 und 23' ein Signal erzeugt. Dieses Signal kann als optisches oder akustisches Signal ausgebildet sein oder der Steuerung 20 zugeführt werden, die die Laser-Bearbeitungsanlage 10 ausschaltet. Hierdurch wird beim Öffnen der Schutzwand 19 ein Not-Stop der Laser-Bearbeitungsanlage ausgelöst. Damit ist sichergestellt, daß bei im Betrieb befindlicher Laser-Bearbeitungsanlage der Bedienungsmann nicht in den Verfahrbereich des Schneidkopfes 13 treten kann.

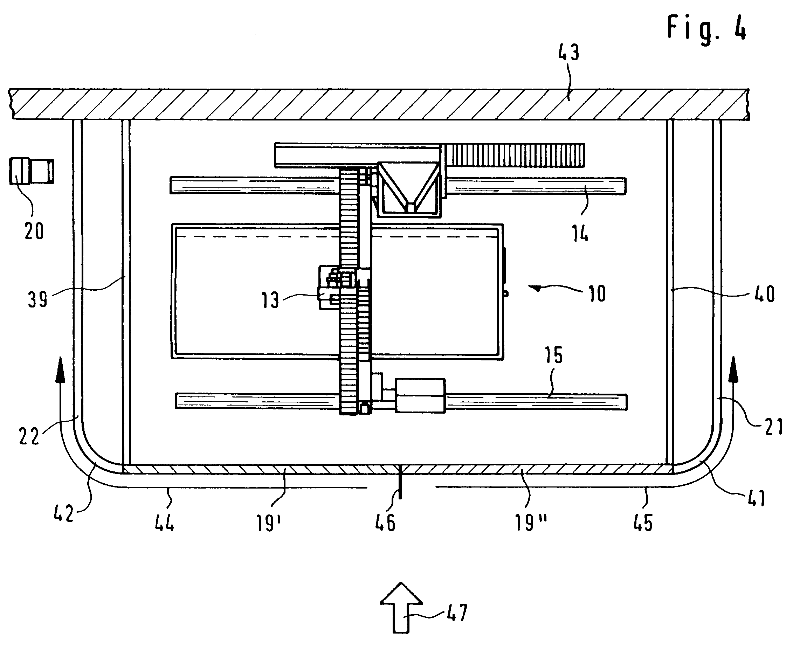

Nach einem weiteren Ausführungsbeispiel gemäß Figur 4, ist die Laser-Bearbeitungsanlage 10 senkrecht zu den Schienen 14, 15 mit feststehenden Laser-Schutzwänden 39, 40 von der Umgebung abgetrennt. Die verfahrbare Schutzwand 19', 19'' hat eine der Öffnung zwischen den Schutzwänden 39, 40 entsprechende Länge und verschließt die zwischen den Schutzwänden 39, 40 verbleibende Öffnung. Die Führungen 21, 22 verlaufen im Bereich der Öffnung gradlinig und biegen unter Bildung eines Radiuses 41, 42 in Verfahrrichtung 44,45 der Schutzwand 19', 19'' nach den Laserschutzwänden 39, 40 bis zur Wand 43 ab. Die Schutzwand 19', 19'' ist in der Mitte 46 geteilt, so daß die Schutzwand 19' nach der einen Richtung 44 und die Schutzwand 19'' nach der anderen Richtung 45 verfahren wird. Es ist selbstverständlich, daß die Schutzwand 19 auch nur nach einer Richtung 44 oder 45 verfahren werden kann oder daß die Trennung der Schutzwand 19', 19'' auch außerhalb der Mitte erfolgen kann. Die Zu- und Abfuhr der Werkstücke zu der Laser-Bearbeitungsanlage 10 ist durch Pfeil 47 gekennzeichnet.

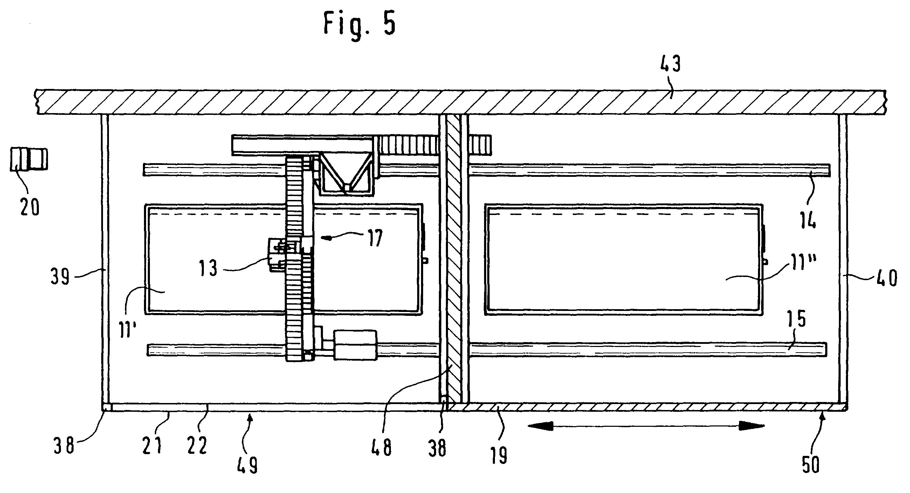

Figur 5 zeigt ein Auführungsbeispiel für eine Laser-Bearbeitungsanlage 10 die zwei Bearbeitungstische 11', 11'' aufweist, die im Verfahrbereich des Schneidkopfes 13 angeordnet sind.

Durch diese Ausbildung der Laser-Bearbeitungsanlage 10 ist es möglich, ein Werkstück auf dem einen Bearbeitungstisch 11' thermisch zu bearbeiten, während auf dem anderen Bearbeitungstisch 11'' ein bearbeitetes Werkstück abgeführt und ein noch nicht bearbeitetes Werkstück zugeführt wird. Bei der wechselnden thermischen Bearbeitung der Werkstücke mit dem Schneidkopf 13, entweder auf Bearbeitungstisch 11' oder 11'', ändern sich auch die mit einer Schutzwand 19 zu umgebenden Verfahrbereiche. Wie in Figur 5 dargestellt ist, ist die Laser-Bearbeitungsanlage 10 senkrecht zu den Schienen 14, 15 mit den feststehenden Laserschutzwänden 39, 40 von der Umgebung abgetrennt. Zwischen den Bearbeitungstischen 11', 11'' ist eine vertikal verfahrbare Schutzwand 48 vorgesehen, die in oberster Vertikalstellung von der Schneidbrücke 17 durchfahren werden kann. Die Schutzwand 48 trennt jeweils den Bearbeitungstisch 11' oder 11'' von dem jeweiligen Verfahrbereich des Schneidkopfes 13 ab. Die zwischen der Laserschutzwand 39 und der Schutzwand 48 bzw. der Laserschutzwand 40 und der Schutzwand 48 verbleibenden Öffnungen 49, 50 werden von einer einzigen der Schutzwand 19 verschlossen, deren Länge einer der Öffnungen 49 oder 50 entspricht. Die Schutzwand 19 wird auf den Führungen 20, 21 immer zu der Öffnung 49 oder 50 verfahren, hinter der die thermische Bearbeitung mit dem Schneidkopf 13 stattfindet. Gleichzeitig wird damit die andere Öffnung 49 oder 50 für den Zu- und Abtransport der Werkstücke freigegeben.

Für die Überwachung der jeweiligen Stellung bzw. Position der Schutzwand 19 sind Überwachungselemente 38 vorgesehen, die an der Schutzwand 19 oder den Laserschutzwänden 39, 40 oder 48 angeordnet sind.

## Patentansprüche

1. Laser-Bearbeitungsanlage mit einem Bearbeitungstisch und einer Laserquelle, die optisch mit einem Schneidkopf verbunden ist, wobei der Schneidkopf mittels einer in Längsrichtung verfahrbaren und über Querführungen, quer verschiebbaren Schneidbrücke beliebig über den Bearbeitungstisch verfahrbar ist und mit einer Steuerung,
dadurch gekennzeichnet, daß mindestens der Verfahrbereich des Schneidkopfes (13) von einer auf Führungen (21, 22) beweglichen Schutzwand (19) umgeben ist.

2. Laser-Bearbeitungsanlage mit einem Bearbeitungstisch und einer Laserquelle, die optisch mit einem Schneidkopf verbunden ist, wobei der Schneidkopf mit mindestens einem Roboterarm beliebig über den Bearbeitungstisch verfahrbar ist und mit einer Steuerung, dadurch gekennzeichnet, daß mindestens der Verfahrbereich des Schneidkopfes (13) von einer auf Führungen (21, 22) beweglichen Schutzwand (19) umgeben ist.

3. Laser-Bearbeitungsanlage nach Anspruch 1 oder 2,
dadurch gekennzeichnet,
daß die Führungen (21, 22) auf dem Boden (39) angeordnet sind.

4. Laser-Bearbeitungsanlage nach einem der Ansprüche 1 bis 3,
dadurch gekennzeichnet,
daß die Führungen (21, 22) unter Flur angeordnet sind.

5. Laser-Bearbeitungsanlage nach einem der Ansprüche 1 bis 4,
dadurch gekennzeichnet,
daß die Schutzwand Segmente (23, 23') aufweist, die lösbar (24) miteinander verbunden sind.

6. Laser-Bearbeitungsanlage nach einem der Ansprüche 1 bis 5,
dadurch gekennzeichnet,
daß die Segmete (23, 23') aus Metall sind.

7. Laser-Bearbeitungsanlage nach einem der Ansprüche 1 bis 6,
dadurch gekennzeichnet,
daß die Segmente (23, 23') aus einem durchsichtigen Material, vorzugsweise Polycarbonat, sind.

8. Laser-Bearbeitungsanlage nach einem der Ansprüche 1 bis 7,
dadurch gekennzeichnet,
daß die Segmente mit Stützelementen verbunden sind und jedes Segment (23, 23') und jedes Stützelement (32, 33) in und/oder auf den Führungen (21, 22) angeordent ist.

9. Laser-Bearbeitungsanlage nach einem der Ansprüche 1 bis 8,
dadurch gekennzeichnet,
daß die Schutzwand (19) freistehend auf den Führungen (21, 22) angeordnet ist.

10. Laser-Bearbeitungsanlage nach einem der Ansprüche 1 bis 9,
dadurch gekennzeichnet,
daß die Führungen (21, 22) als Schienen ausgebildet sind.

11. Laser-Bearbeitungsanlage nach einem der Ansprüche 1 bis 10,
dadurch gekennzeichnet,
daß die Schutzwand (19) mit einem motorischen Antrieb (37) verbunden ist und mittels des Antriebs selbsttätig verfahrbar ist.

12. Laser-Bearbeitungsanlage nach einem der Ansprüche 1 bis 11,
dadurch gekennzeichnet,
daß die Segmente (23, 23') flexibel miteinander verbunden sind.

13. Laser-Bearbeitungsanlage nach Anspruch 12,
dadurch gekennzeichnet,
daß mehrere Segmente (23, 23') flexibel miteinander verbunden sind und gemeinsam motorisch verfahrbar sind.

14. Laser-Bearbeitungsanlage nach einem der Ansprüche 1 bis 13,
dadurch gekennzeichnet,
daß mindestens einem Segment (23, 23') ein Überwachungselement (38) zugeordnet ist, welches bei einer Relativbewegung des Segmentes (23, 23') ein Signal erzeugt.

15. Laser-Bearbeitungsanlage nach Anspruch 14,
dadurch gekennzeichnet,
daß das Signal der Steuerung (20) zugeführt wird, die die Laser-Bearbeitungsanlage (10) ausschaltet.

16. Laser-Bearbeitungsanlage nach einem der Ansprüche 1 bis 15,
dadurch gekennzeichnet,
daß die Steuerung (20) außerhalb des von der Schutzwand (19) umgebenen Verfahrbereichs angeordnet ist.

17. Laser-Bearbeitungsanlage nach einem der Ansprüche 1 bis 16,
dadurch gekennzeichnet,
daß die Schutzwand eine Höhe (34) von < 4 m aufweist.

18. Laser-Bearbeitungsanlage nach einem der Ansprüche 1 bis 17,
dadurch gekennzeichnet,
daß die Schutzwand (19) aus einem strahlungsdichten Werkstoff besteht.

19. Schutzwand für eine Laser-Bearbeitungsanlage nach einem der Ansprüche 1 bis 18.
